(19) Europäisches Patentamt / European Patent Office / Office européen des brevets

(11) **EP 4 323 568 B1**

(12) **EUROPEAN PATENT SPECIFICATION**

(45) Date of publication and mention of the grant of the patent:
**21.05.2025 Bulletin 2025/21**

(21) Application number: **23700145.8**

(22) Date of filing: **05.01.2023**

(51) International Patent Classification (IPC):
*D01D 5/06* (2006.01)   *D01F 13/02* (2006.01)
*D04H 3/013* (2012.01)   *D01F 2/02* (2006.01)
*C01D 5/00* (2006.01)   *C08B 16/00* (2006.01)
*C08B 15/06* (2006.01)

(52) Cooperative Patent Classification (CPC):
**D01D 5/06; C08B 15/06; C08B 16/00; D01F 2/02; D01F 13/02;** D04H 3/013; Y02P 70/62

(86) International application number:
**PCT/FI2023/050010**

(87) International publication number:
**WO 2023/131748 (13.07.2023 Gazette 2023/28)**

(54) **CELLULOSIC TEXTILE FIBRE**

CELLULOSE TEXTILFASER

FIBRES TEXTILES CELLULOSIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.01.2022 FI 20225011**

(43) Date of publication of application:
**21.02.2024 Bulletin 2024/08**

(73) Proprietor: **Infinited Fiber Company Oy**
**02150 Espoo (FI)**

(72) Inventors:
• **MALANIN, Erkki**
**02150 Espoo (FI)**
• **SIREN, Sakari**
**02150 Espoo (FI)**
• **NUOPPONEN, Markus**
**02150 Espoo (FI)**
• **VEIJOLA, Elias**
**02150 Espoo (FI)**

(74) Representative: **Laine IP Oy**
**Porkkalankatu 24**
**00180 Helsinki (FI)**

(56) References cited:
WO-A1-2021/053272   WO-A1-2021/181007
CN-A- 102 766 216   US-A1- 2016 138 200

**Description**

FIELD

The present invention relates to a cellulosic textile fibre. Further, the invention relates to a method for the manufacture of a cellulosic textile fibre. Uses of the cellulosic textile fibre as well as an article comprising the cellulosic textile fibre are also disclosed.

BACKGROUND

Cellulose, the most abundant renewable organic material on earth, exhibits outstanding properties for fibre applications. The viscose process, despite its environmental challenges, is still the most widely used technology to manufacture regenerated cellulose fibres and films. Thus, there is need to develop simpler and sustainable textile fibre preferably having improved properties compared to traditional production processes.

European patent application publications EP 1509548 A1 and EP 1470162 A1 both describe the manufacture of cellulose carbamate from high quality cellulose solutions. Cellulose carbamate is known as an environmentally-friendly alternative for the production of manmade cellulosic fibres. International patent application publication WO 2021/038136 also describes spinning fibres from cellulose carbamate. However, while having e.g. passable strength properties, cellulose carbamate technology has not so far been able to produce textile-quality fibres. Document WO 2021/053272 discloses coloured lyocell type fibres comprising re-spun coloured recycled fibres and a method of producing the same. According to the method a raw-material of coloured recycled textile fibres is provided and dissolved in an ionic liquid to provide a spinning dope. By spinning the dope using dry jet-wet spinning coloured re-spun textile fibres can be manufactured. The method provides for the simultaneous recycling of cellulose fibres and dyes from dyed cotton waste in the form of dyed lyocell fibres. Document US 2016/0138200 concerns a method for the recovery of solvent in a process for preparation of regenerated cellulosic fibres using sodium hydroxide as solvent for cellulose dissolving in the manufacturing of a cellulose spinning dope wherein sodium hydroxide present in the spinning dope is at least partially recovered and recycled as sodium hydroxide from a cellulose fibre regeneration or cellulose coagulation step. Said cellulose fibre regeneration or cellulose coagulation step consists of a bath into which cellulose spinning dope is injected. Recovered sodium hydroxide may be directly or indirectly recycled from a cellulose fibre regeneration or cellulose coagulation step to a cellulose dissolving step. Document CN 102766216 presents a preparation method for cellulose carbamic acid ester, in which cellulose pulp is added to alkali liquor of set concentration according to certain bath ratio to be processed to obtain alkali cellulose; and the alkali cellulose and urea are used as raw materials, supercritical carbon dioxide flow is used as a carrier, under the assistance of a cosolvent, and supercritical $CO_2$ dissolves the urea and carries the urea to enter positions among alkali cellulose molecules to finish activation of alkali cellulose molecules and embedding of the urea. Simultaneously, by controlling the temperature and pressure of a reaction kettle, the alkali cellulose and the urea embedded among the alkali cellulose undergo esterification to obtain cellulose carbamic acid ester.

OBJECTS AND SUMMARY OF THE INVENTION

It is an aim of the present invention to overcome at least some of the problems associated with the prior art and provide a manmade cellulosic fibre of textile quality. By means of embodiments it has surprisingly been found that by modifying the spin bath and the conditions under which fibres are stretched, manmade cellulosic fibres having improved properties can be obtained. In particular, the present method allows manufacturing cellulosic textile fibres at least partially from waste material, and yet to obtain fibres that are strong enough for textile industry.

The invention is defined by the features of the independent claims. Some specific embodiments are defined in the dependent claims.

According to a first aspect of the present invention, there is provided a manmade cellulosic textile fibre having a linear density of 0.8-1.8 dtex, a tenacity of 2.0-2.9 cN/dtex, and an initial modulus of 50-120 cN/dtex. The manmade cellulosic textile fibre is such that at least 50 wt-% of its raw material is cellulose-containing waste, and at least 50 wt-% of the cellulose-containing waste is textile waste.

According to a second aspect of the present invention, there is provided a method for the manufacture of cellulosic textile fibre, comprising the steps of pre-treating cellulose-based material, comprising at least 50 wt-% of cellulose-containing waste, wherein at least 50 wt-% of the cellulose-containing waste is textile waste; performing cellulose carbamation to form cellulose carbamate; dissolving the cellulose carbamate in an aqueous alkaline medium to form a cellulose carbamate dope; spinning the cellulose carbamate dope in the aqueous spinning medium to form filaments or filament tow while subjecting the filament or filament tow to stretching by at least 70 % by length, when temperature of the stretching bath is 75-100 °C, to obtain cellulose carbamate fibres having a linear density of 0.8-1.8 dtex, a tenacity of 2.0-2.9 cN/dtex, and an initial modulus of 50-120 cN/dtex.

According to a third aspect of the present invention there is provided a cellulosic fibre obtainable by the second aspect of present invention.

According to a fourth aspect of the present invention there is provided a use of the cellulosic textile fibre described in any of the above aspects of the present invention in an article.

According to a fifth aspect of the present invention there is provided an article comprising the cellulosic textile fibre of any of the above-described aspects of the present invention.

BRIEF DESCRIPTION OF THE DRAWINGS

FIGURE 1 illustrates tenacity strain curves of reference materials and a manmade cellulosic textile fibre in accordance with at least some embodiments of the present invention.

FIGURE 2 is a light micrograph showing fibres according to at least some embodiments of the invention.

FIGURE 3 is a light micrograph showing the cross sections of manmade cellulosic fibres according to at least some embodiments of the present invention.

FIGURE 4 is an electron micrograph showing the cross sections of a sample of reference fibres.

FIGURE 5 is an electron micrograph showing the cross sections of a sample of fibres according to at least some embodiments of the present invention.

FIGURE 6 is a light micrograph comparing homogeneity and brightness of a fibre according to at least some embodiments of the present invention with a reference fibre.

FIGURE 7 is a light micrograph illustrating the structural difference between a fibre according to at least some embodiments of the present invention and a reference fibre.

DETAILED DESCRIPTION

Manmade cellulose fibre is a fibre whose structure and properties are modified during the manufacturing process. Manmade fibres are to be distinguished from natural fibres such as silk, cotton, and wool. Manmade cellulose fibres are made of the same cellulose polymers that make up e.g. cotton, hemp, flax, and the structural fibres of wood. In the case of manmade cellulose fibre, the cellulose is acquired in a modified state e.g. cellulose from wood pulping operations, or it is modified in order to be regenerated into practical cellulose-based fibres.

The linear density, a measure of the mass per unit length of a fibre, is used by fibre manufacturers as a measure of fineness. The linear density in decitex is the weight in grams of a 10,000 m length of fibre. Decitex is the approved SI unit for linear density. Linear density in dtex is measured according to ISO 1973:2021.

Tenacity is the measure of strength of a fibre. It is usually defined as the ultimate (breaking) force of the fibre (in gram-force units) divided by linear density. Tenacity is defined as the ratio between ultimate (breaking) force/load and linear density of specimen. Tenacity of a specimen may be expressed as the units of cN/dtex, gram/tex, gram/denier, Newton/tex etc. Fibre tenacity (cN/dtex) is measured according to ISO 5079:2020.

In textiles, the term initial modulus is used to describe the initial resistance to extension of a textile fibre, and it is measured using ISO 5079:2020. In other words, this is a measure of fibre's resistance to small initial extension. When the fibre has high resistance to stretching, it will have high modulus. The tangent of angle between initial curve and horizontal axis is equal to the ratio of stress and strain. This ratio is termed as initial modulus but, in textile science, it is known as initial Young's modulus. Initial modulus of textile fibre depends on chemical structure, crystallinity, orientation of fibre etc. Initial modulus is $\tan \alpha$ = Stress / Strain.

Elongation at break is the elongation of the fibre produced by the breaking force. Breaking extension (%) = elongation at break x 100 / original length of specimen. It is measured using ISO 5079:2020.

Nitrogen content in cellulosic textile fibre or in cellulose carbamate refers to amount of nitrogen bound as carbamate groups in cellulose. In this context, it is given in weight-% of the total weight of the fibre or cellulose carbamate (depending on when it is measured) and measured according to SFS 5505:1988.

Cellulosic textile fibre in the present invention refers to fibres in the form of staple fibre, shortcut fibre, flock, filament yarn, tow of filaments. Cellulosic textile fibre in the present invention refers also to fibres used in non-woven applications. The term filament in this description is also to be understood to cover a filament tow.

The raw material can be different types of cellulose-rich textile waste, e.g. post-consumer waste, pre-consumer waste, industrial textile waste or side streams from textile manufacturing. The textile waste may be collected and sorted. The terms recycled waste material and waste material may also be used interchangeably.

In the present description, when weight percentage (wt-%) are used, it is meant the weight percentage within the relevant material, unless otherwise indicated.

Unless specified otherwise, the term hot bath shall be taken to mean a bath having a temperature in the range of 75 degrees Celsius to 100 degrees Celsius.

As described above, embodiments of the invention relate to a manmade cellulosic textile fibre, in particular a wet spun manmade cellulosic textile fibre.

In an embodiment, the manmade cellulosic textile fibre has a linear density of 0.8-1.8 dtex, a tenacity of 2.0-2.9 cN/dtex, an initial modulus of 50-120 cN/dtex and comprises a cellulose-based material. Fibres having a dtex at the lower end of the range such as 0.8 to 1.3 are suitable for providing e.g. light-weight textiles typically from fibres having a titer of about 1.5 or less. Cotton fibres typically have a tenacity at the higher end of the range and above, while the conventional wet spun manmade cellulosic fibres typically have a tenacity at the lower end of the range. The cN/dtex value of the manmade cellulosic textile fibre according to embodiments is measured in the dry state, *i.e.* in the conditioned state. The value range of 50-120 cN/dtex is higher than for conventional manmade viscose, which typically has a modulus, measured in the dry state e.g. in the range of 20-40 cN/dtex.

Said cellulosic textile fibre comprises a cellulose-based material wherein at least 50 wt-% of the raw material of the textile fibre is cellulose-containing waste, and at least 50 wt-% of the cellulose-containing waste is textile waste. According to an embodiment, the raw material of the textile fibre is 100 % textile waste, i.e. only textile waste is used as raw material.

In an embodiment, the fibre has a content of p-terephthalate and/or p-terephthalic acid and/or unhydrolysed or partly unhydrolysed polyester, in particular polyethylene terephthalate, of 0.00005-0.5 wt-%, determined by gas chromatography-mass spectrometry (GC-MS) as explained in more detail below in the Examples. The amount can be for example less than 0.2 % by weight, preferably less than 0.1 % by weight. The presence of p-terephthalate and/or p-terephthalic acid and/or unhydrolysed or partly unhydrolysed polyester is one indication that textile waste material has been used as raw material in the manufacturing of the cellulose carbamate.

The cellulose-based material may comprise virgin cellulose and/or may comprise recycled cellulose from sources such as jute, hemp, kenaf, cotton, bagasse and the like. The manmade cellulosic fibre according to embodiments of the present invention has good resistance against wear, *i.e.* has good strength properties. The fibre has a similar initial modulus to cotton, whereby fibres of embodiments described herein provide good strength properties to threads, yarns and fabrics made from a combination of virgin cellulose, e.g. cotton intertwined with the present fibres.

The cellulosic textile fibres are such that at least 50 wt-% of the raw material of the textile fibre is cellulose-containing waste, and at least 50 wt-% of the cellulose-containing waste is textile waste. The present fibres and their manufacturing method thus allow manufacturing textile fibres that comprise recycled material, and still have properties that allow them to be used in textile industry, such as for weaving.

By embodiments of the present technology, cotton-like manmade fibres are provided. Elongation of the present fibres can be adjusted e.g. by stretching and by modifying the carbamate content such that the fibres exhibit elongation generally in the range of about 5 to 20 %, preferably about 7 to 19 %. Thus, fibres having elongation properties similar to those of cotton can be provided by the present technology. In embodiments of the present technology, fibres for example of the aforementioned kind are provided which are flexible enough to be easily used is yarn manufacturing processes.

Special rayon fibres such as Modal have improved mechanical wet properties. However, the present cellulosic textile fibre is economically more viable and more cotton-like, while still having the above mentioned enhanced properties.

In one embodiment, the cellulosic textile fibre comprises 90 wt-% or more, in particular 95 wt-% or more, by dry weight, of cellulose. Non-cellulosic components such as plastics, nylon, polyethylene, polypropylene, elastane and possibly nitrogen containing impurities such as biuret may also be present in small amounts. Further, spin-finishing chemicals are used for modifying processability in e.g. carding and/or yarn production. Optionally, other additives may be incorporated into the cellulosic textile fibre. The optional chemicals may be used to modify the processability and/or to modify physical properties such tensile strength, modulus or elasticity of the final product. The optional chemical may act as a tracer. Processing aids, surfactants, lubricants, wetting agents, stability, colour and brightness modifiers, delustrants such as titanium dioxide, e.g. anatase or rutile titanium dioxide, dyes, pigments, flame retardants, fillers, anti-statics and auxiliaries to reduce friction of the fibre may also be present in the cellulosic textile fibre.

In a further embodiment, the cellulose-based material comprises recycled waste material, suitably at least 25 wt-%, preferably at least 50 wt-% of the cellulose of said cellulose-based material is formed by recycled textile waste. As discussed above, at least 50 wt-% of the raw material of the textile fibre is cellulose-containing waste, and at least 50 wt-% of the cellulose-containing waste is textile waste. It is also possible to use at least 55, 60, 65, 70, 75, 80, 85, 90, 95 or 100 wt-% of cellulose-containing waste as raw material. Of this cellulose-containing waste, at least 50 wt-% is textile waste, and textile waste can be at least 55, 60, 65, 70, 75, 80, 85, 90, 95 or 100 wt-% of the cellulose-containing waste. As will be discussed below, the cellulose-containing waste can also comprise for example paper or cardboard waste.

The manmade fibres obtained with the present method can be combined with cotton fibres, with which they may intertwine to provide threads or yarns with interesting properties. The cotton fibres can be virgin or recycled cotton fibres, such as mechanically recycled cotton fibres, or a blend comprising virgin and mechanically recycled cotton fibres can be used with the present fibres. Thus, the manmade fibres, e.g. optionally manufactured from recycled cotton, can be used to replace at least a portion of virgin cotton in threads, yarns and in textiles, and other articles comprising cellulosic fibres.

In a further embodiment, the cellulosic textile fibre is cellulose carbamate fibre. In one embodiment, the cellulosic textile fibre has an elongation of 7-19 % of the length of fibre before breakage and a nitrogen content of 0.10 to 1.2 wt-%, preferably 0.15-1.0 wt-%, in particular 0.3-0.9 wt-% by dry weight of the fibre. In one embodiment, the cellulosic textile fibre has a wet strength of at least 0.9 cN/dtex and a relative wet strength 40-80 %, preferably 45-80 % (wet tenacity/dry tenacity).

In a particular embodiment, the cellulosic textile fibre exhibits a linear density of 1.1-1.5 dtex, preferably 1.2-1.4 dtex. The cellulosic textile fibre may also have a tenacity of 2.1-2.8 cN/dtex, preferably 2.4-2.7 cN/dtex. According to another embodiment, the cellulosic textile fibre has an initial modulus of 60-120 cN/dtex, preferably 70-115 cN/dtex, more preferably 90-120 cN/dtex.

Further embodiments relate to the manufacture of a cellulosic textile fibre. In one embodiment, said method comprises the steps of pre-treating cellulose-based material; performing cellulose carbamation to form cellulose carbamate; dissolving the cellulose carbamate in an aqueous alkaline medium to form a dope; spinning the cellulose carbamate dope in an aqueous spinning medium to form filaments or filament tow; and stretching the filaments or filament tow, optionally cutting, to obtain cellulose carbamate fibres having a linear density of 0.8-1.8 dtex, a tenacity of 2.0-2.9 cN/dtex, and an initial modulus of 50-120 cN/dtex. The cellulosic textile fibre manufactured by the method may be in the form of a filament or in the form of a staple fibre. The cellulose-based material comprises at least 50 wt-% of cellulose-containing waste, wherein at least 50 wt-% of the cellulose-containing waste is textile waste. During spinning, the filament or filament tow is subjected to stretching by at least 70 % by length, when temperature of stretching bath is 75-100 °C.

The embodiments and variants disclosed above in connection with the manmade cellulosic textile fibre apply *mutatis mutandis* to the method.

Embodiments comprise providing a cellulose carbamate dope, feeding the dope into a spinning unit exhibiting an aqueous spin bath, coagulating the cellulose carbamate from the dope into the aqueous spin bath to form cellulose carbamate filaments, subjecting the cellulose carbamate filaments to stretching in one or more stretching units and optional washing in one or more washing units, and optionally cutting the filaments into fibres, wherein cellulose carbamate filaments or stable fibres are obtained. Spinning as such is known to a person skilled in the art.

In a particular embodiment, the method comprises chemically modifying the pre-treated cellulose-based material in addition to or instead of, the cellulose carbamate, or the dissolved cellulose carbamate or spun cellulosic textile fibre. The chemical modification may also be called modification by chemical treatment.

Cellulosic textile fibre may be modified by subjecting to spin-finishing with spin-finishing agents, e.g. antistatics, cohesive agents and lubricants.

As described above, the cellulose-based material is pre-treated before carbamation. In an embodiment, the cellulose-based textile material is pre-treated by mechanically treating it to predetermined particle size, the mechanically treated material is the subjected to an acidic treatment and an alkaline treatment in a cooking liquor, in desired order, and optionally to a bleaching treatment. In embodiments the pre-treatment of cellulose may comprise the steps of providing a mixture comprising cellulose, and a liquid, and mechanically working the mixture, e.g. by shear mixing in a continuous mechanical mixing device. Such pre-treatment is disclosed for example in WO 2021/181007.

During pre-treatment of cellulose, comprising providing a mixture having a solid content, said mixture comprising cellulose, and a liquid, the mixture preferably has an initial solid content of at least 50 % by weight of the mixture, preferably the initial solid content is 50 % or more by weight of the mixture, for example more than 50 % by weight of the mixture such as 51 % by weight of the mixture, 52 % by weight of the mixture or for example, 55 % by weight of the mixture, suitably at least 65 % by weight of the mixture, particularly up to 75 % by weight of the mixture, most preferably up to 71 % or 72 % or 73 % or 74 % by weight of the mixture. Mechanical working of extra high consistency pulps, such as these as compared to low consistency pulps provides improved dislocation of lamella in fibre cell walls leading to improved absorption of chemicals such as urea on a molecular level in the mixture, or pulp. The initial solid content of at least 50 wt-% of the mixture ensures efficient handling of the cellulose, *i.e.* that the cellulose walls are acted on by sufficient shear forces to effectively break down cell walls and increase accessibility of the cellulose fibrils of solvents and chemicals. An initial solid content of lower than 50 %, such as less than about 45 % by weight results in a less efficient handling of the cellulose. Thus, when urea is added, it is advantageous that the solid content is 50-75 wt-%.

In embodiments, it is preferred that the solid content does not exceed 90 % by weight of the mixture, preferably the solid content does not exceed 75 % by weight of the mixture. Maintaining a high consistency pulp in which the solid content does not exceed 90 % by weight of the mixture, preferably does not exceed 75 % by weight of the mixture, ensures that hornification or recrystallisation due to deactivation caused by losing free hydroxyl groups does not occur, and thus the cell wall structure is not closed to absorbing chemicals.

Between the limits described above, space is sufficient so that shear forces can act on the cellulose without tearing fibrils from the surface of the cellulose and so that accessibility of the fibrils on the fibre cell walls to solvents and chemicals is increased, which is optimal. The mixture having solid contents in the above described limits is optimal for cotton for example, as the six layer fibril structure is not wetted through at such solid contents. When cotton is wetted through, the fibril structure locks and it becomes even more difficult to break open the fibril structure to increase accessibility of the cellulosic fibres.

The cellulose may be from various sources and in the form of various pulps. In one embodiment, the cellulose is selected from the group consisting of chemical pulp, mechanical pulp, thermomechanical pulp, chemical thermomechanical pulp, and mixtures thereof.

In a further embodiment, the chemical pulp is selected from the group consisting of organosolv pulp, soda pulp, dissolving pulp, kraft pulp, sulphite pulp, hot water extraction pulp, and mixtures thereof. In embodiments, paper grade pulp is used. In further embodiments, dissolving grade pulp is used. Recycled pulps such as deinked pulp are also useful in embodiments. In a particular embodiment, the cellulose is a dried dissolving pulp.

The origin of the feedstock can be either the virgin form of the chemical or dissolving pulp or the recycled feedstocks such as recycled paper and/or cardboard containing chemical pulp or dissolving type pulp.

Natural plant fibres as such or in the form of chemical pulp or dissolving pulp are also useful as feedstocks. The origin of natural plant fibres can be either their virgin forms or natural plant fibre containing textiles or recycled natural fibre containing textiles. Natural plant fibres include seed fibres such as cotton and kapok; bast fibres such as hemp, jute, kenaf, ramie, abaca and linen (flax); leaf fibres such as manila, sisal, pineapple and banana; fruit fibres such as coir.

In one embodiment, the cellulose is obtained from recycled cellulose selected from the group consisting of paper, cardboard, cotton, cotton linter, wheat straw, rice straw, corn stover, hemp, kenaf, bagasse, bamboo, flax, jute and mixtures thereof. Embodiments of the method are particularly effective in the pre-treatment of such demanding pulps having multiple fibril layers such as cotton, cotton linter, hemp, flex, linen and other stalk and seed fibres. The cellulose may also be obtained from polycotton blends, whereby the cellulosic component is separated from non-cellulosic components before the pre-treatment of the cellulose is carried out.

Similarly, virgin sources of cellulose are equally suitable. Thus, in an embodiment the cellulose is obtained from virgin cotton, virgin cotton linter, virgin wheat straw, virgin rice straw, virgin corn stover, virgin hemp, virgin kenaf, virgin bagasse, virgin bamboo, virgin flax, virgin jute and a mixture thereof.

After pre-treatment and carbamation to provide cellulose carbamate, the carbamate is, in an embodiment, dissolved in an alkaline aqueous medium of the dope to provide a cellulose carbamate dope. In one embodiment, the cellulose carbamate is dissolved in an aqueous alkaline solution made of sodium hydroxide and zinc, for example zinc oxide and/or zinc hydroxide. The addition of zinc has been shown to improve the solubility of cellulose carbamate and to improve the stability of the cellulose carbamate solution. The alkaline solution is made from sodium hydroxide and zinc, whereby zincate is formed. Thus, in embodiments the alkaline solution comprises sodium zincate.

According to one embodiment, there is provided a method of producing cellulose carbamate filaments or fibres, comprising the steps of providing a cellulose carbamate dope containing cellulose carbamate dissolved in aqueous sodium hydroxide, said dope further exhibiting a dissolved zinc compound, and feeding the dope into a coagulation unit.

According to one specific embodiment, the cellulose carbamate dope comprises:

- 6-10 wt-%, preferably 8-10 wt-% of cellulose carbamate (CCA),
- 5-10 wt-%, preferably 5-7 wt-% of sodium hydroxide (NaOH),
- 0.1-2 wt-%, preferably 0.1-1.5 wt-% of zinc oxide (ZnO),
- optionally processing aids and/or other additives,

weight percentages (wt-%) calculated from the total weight of the cellulose carbamate dope. As mentioned above, zinc can be used in another form than zinc oxide, and the amount of zinc is 0.08-1.6 wt-%.

Thus embodiments relate to cellulose carbamate fibres, where the cellulose carbamate has an average degree of polymerisation (DP) of 180 to 500, preferably 200 to 500, particularly 230 to 350. The degrees of polymerisation correspond to intrinsic viscosities of 146 to 368 ml/g, 161 to 368 ml/g and 182 to 267 ml/g, respectively, based on the CED viscosity measurement according to ISO 5351:2010 (by dissolving the cellulose carbamate according to the standard, measuring the limiting viscosity of the cellulose and calculating the degree of polymerisation). The DP is calculated using the following equation: $DP^{0.905} = 0.75 \, [\eta]$ where the values of 0.905 and 0.75 are constants characteristic of the cellulose-solvent system and $[\eta]$ is the intrinsic viscosity (ml/g). In order to have cellulose carbamate that is suitable for wet spinning of fibres, the degree of polymerisation of the cellulose carbamate is preferably reduced from conventional values to the range of values described here. The cellulose carbamate according to an embodiment has a nitrogen content of 0.3 to 3.0 % by weight of the cellulose carbamate, measured according to SFS 5505:1988 as described above.

The carbamate group is stable in slightly alkaline conditions, in neutral conditions and in acidic conditions (e.g.

under acidic spinning and stretching conditions). The carbamate group hydrolyses in concentrated alkaline conditions (e.g. dissolved cellulose carbamate hydrolyses in aqueous alkaline solution having NaOH content of at least e.g. 6.5 % by weight of dope). Cellulose carbamate starts to hydrolyse instantly after dissolving in alkaline conditions for making a dope. The higher the temperature of dope and the longer the delay between dissolving and coagulation, the higher the rate of hydrolysis and the lower the amount of carbamate groups bound in cellulose i.e. the nitrogen content bound in cellulose. The rate of the hydrolysis determines the degree of substitution of cellulose carbamate. Different spin baths, e.g. alkaline versus acidic spin baths in a wet spinning process, subsequent stretching step(s), further washing, different finishing and further after-treatment processes may be used to manufacture fibres with preferred or more suitable properties. A person skilled in the art is readily able, based on the present description and the examples below, to determine suitable conditions.

An after-treatment process may optionally comprise one or more of the following process steps: a) post-hydrolysis of carbamate groups by hot alkaline liquor (e.g. cellulose carbamate fibres coagulated in alkaline coagulation bath and stretched in alkaline stretching having nitrogen content of 0.8 wt-% was subjected to post-hydrolysis in after-treatment by treating fibres with post-hydrolysis liquor containing $Na_2CO_3$ and NaOH for 3 min at 95 degrees Celsius, nitrogen content of the recovered fibre was 0.17 wt-%), b) acidic and/or neutral and/or alkaline bleaching step and/or c) spin finishing. The carbamate group is stable in acidic systems and hydrolyses in alkaline baths. Thus, the fibre properties may be manipulated during coagulation, stretching, further washing and further after-treatment regeneration depending on the alkalinity, temperature and residence time in each step. Especially selecting such after-treatment conditions in order to adjust the hydrolysis rate of the cellulose carbamate and using conditioned stretching. The tow of cellulosic filament is stretched in the first spin bath or directly after the first spin bath in order to improve the fibres' final initial modulus and tenacity. The shape of the fibre may be controlled by adjusting degree of substitution of cellulose carbamate entering spinning and stretching conditions, e.g. roundish oval, bean or lobed fibres may be obtained as a result of controlled spinning and stretching of controlled nitrogen containing cellulose carbamate, creating a smooth surface.

In one embodiment, the cellulose carbamate dope is fed into the spinning unit exhibiting an aqueous spin bath containing sulphuric acid and a dissolved aluminium compound. Preferably, the cellulose carbamate dope is fed into the spinning unit through one or more spinnerets. The dope is fed into the spinning unit at a suitable flow rate. According to one embodiment, once the cellulose carbamate dope is fed into the spinning unit, the sulphuric acid will react with the sodium hydroxide and zinc dissolved in sodium hydroxide forming sodium sulphate, zinc sulphate and water, whereby the spin bath comprises sulphuric acid, zinc sulphate, aluminium sulphate, sodium sulphate and water. The cellulose carbamate is coagulated and while being extruded through spinnerets, it will be shaped into filaments.

In the spin bath, cellulose carbamate is coagulated into cellulose carbamate filaments, preferably through one or more spinnerets. Such filaments may be recovered from the spin bath and subjected to stretching, optional cutting into fibres, and optional after-treatment in which the filaments or fibres are washed, bleached and/or spin finished.

According to one embodiment, the stretching bath is a hot stretching bath, where filaments or a tow of filaments are immersed in stretching bath solution. The temperature in the stretching bath(s) is typically in the range of 75 to 100 °C, preferably 85 to 95, more preferably about 90 °C. The stretching bath can be the same bath as the spin bath.

The method may also comprise a cutting step after the stretching step, whereby the stretched filaments or filament tow are cut.

After stretching, and optional cutting, the filaments or fibres may be subjected to after-treatment in an after-treatment unit. According to a preferred embodiment, the after-treatment comprises washing, optional post-hydrolysis, bleaching, spin finishing or any combination thereof. In one embodiment, washing if performed as counter current washing using water or the effluent of a preceding or subsequent processing step. In a preferred embodiment, the after-treatment unit is operated on a counter current principle.

Finally, the obtained filaments or fibres are dried, by any known drying method.

As described above the dissolved cellulose carbamate is subjected to spinning in an aqueous medium. In addition to spinning in an acidic bath, in another alternative embodiment, the dissolved cellulose carbamate is subjected to spinning in an alkaline spin bath, i.e. the aqueous spinning medium is an alkaline spin bath. In one embodiment, the spin bath comprises sodium carbonate and less than 3 wt-%, preferably 0.4 to 2.99 wt-%, in particular less than 2 wt-% sodium hydroxide, such as. 1.0 to 1.99 wt-% of sodium hydroxide.

In a further embodiment, the dissolved cellulose carbamate is subjected to spinning in an alkaline spin bath comprising sodium hydroxide and sodium carbonate at a weight ratio 1:9-1:30 (i.e. calculated as wt-%), preferably in a spin bath (coagulation bath) having a pH of more than 7.0, particularly a pH of at least 10.

Various spin baths and various finishing processes may be used to manufacture fibre with improved properties. Carbamate groups are stable in acidic systems and hydrolyse in alkaline baths. Thus, in an embodiment, fibre properties may be manipulated during regeneration, especially using conditioned stretching and/or conditioned after-treatment as regeneration of carbamate cellulose takes place during coagulation, stretching and/or after-treatment.

The dissolved cellulose carbamate is subjected to wet spinning while subjecting the filament or filament tow to stretching in the stretching unit. The stretching bath is a hot bath, temperature 75-100 °C. In a suitable embodiment, the filament or filament tows are stretched by at least 70 % by length, preferably greater than or equal to 90 % by length, in particular greater than or equal to 95 % by length or generally 70-120 % by length in a stretching unit, preferably 90-120 % by length. Thus, according to an embodiment, the total stretching after coagulation of filaments is greater than or equal to 90 % by length, in particular greater than or equal to 95 % by length or generally 70-120 % by length in a stretching unit, preferably 90-120 %. Stretching by length refers to total godet stretching by adjusting stretching stress of filament or tow of filament between rotating rollers with different circumferential speed, e.g. the circumferential speed of the first roller is 25 m/min and the speed of the last roller is 50 m/min, thus the resulting godet stretching is 100 % by length. These high levels of stretching contribute to the provision of a high initial modulus product when the temperature of the stretching bath(s) is 75-100 °C.

When cellulose carbamate is dissolved, carbamate hydrolysis begins and some carbamate groups hydrolyse during dissolution, filtration and de-aeration of the dope. In an embodiment, the nitrogen content of the cellulose carbamate may be adjusted by changing dissolution conditions such as time, temperature and/or sodium hydroxide concentration. The nitrogen content for wet spinning of cellulose carbamate is adjusted to produce textile-quality fibres. Carbamate hydrolysis stops when coagulating takes place in an acid spin bath. When spinning into alkaline coagulation baths, regeneration of the cellulose takes place gradually during coagulation and stretching of the tow. In one embodiment, nitrogen removal can be continued in the filament formation phase. Spinning parameters and stretching influence orientation of fibres, crystallinity and the final shape of textile fibre, and thus, influence mechanical properties of the fibre. In a further embodiment nitrogen content of the final product may be adjusted in washing and after treatment stages where most of the remaining carbamate groups may be removed (hydrolysed), particularly in alkaline washing steps. In a preferred embodiment, the nitrogen content of the final product is in the range of 0.10-1.2 wt-%, preferably 0.15-1.0 wt-%, in particular 0.2-0.9 wt-% by dry weight of the fibre. This corresponds to a degree of substitution (DS) range of cellulose carbamate 0.012-0.144.

A low nitrogen content in the final product is beneficial if improved wet properties such as low wet elongation and high wet tenacity are sought. In an embodiment, the nitrogen content in the final product is in the range of 0.10-0.75 wt-%, corresponding to a degree of substitution of cellulose of 0.012-0.09.

Cellulose textile fibre is biodegradable. Also, cellulose carbamate is biodegradable even if substituted.

Dye uptake of the cellulose carbamate fibres is very high and dye uptake can also be affected by the final nitrogen content.

In an acidic spin bath, fibre shape may be controlled by an amount of aluminium (sulphate) in the spin bath in addition to controlled stretching. An amount of aluminium allows forming a regular fibre in controlled way. In an embodiment, the concentration of aluminium sulphate in the acidic spin baths is at 90 g/l or greater, preferably 90-120 g/l. Aluminium is important since it improves the quality of the produced fibres. Especially the shape of fibres is controlled by the amount of aluminium (sulphate) in the spin bath in addition to controlled stretching. In particular, aluminium has an effect on the shape of the cross-section of the fibre. Further, aluminium inhibits crystallisation of cellulose during the coagulation process. Ampholytic aluminium compounds have an effect on acid-base neutralisation reactions during the coagulation process. Simultaneously tenacity yield of the recovered fibres is improved.

For the purposes of embodiments:

- draw ratio is the ratio between the take-up roller and the extrusion rate, and
- draw ratio is Dr = v, take up / v, extrusion, where v is velocity, i.e. velocities entering and exiting the spinneret.

$$\text{Spinneret draw ratio (Dr)} = \pi \cdot a \cdot b \cdot \rho \cdot \alpha \cdot \varnothing^2 / (DTEX \cdot 1 \cdot (1 + \Omega/100) \cdot 4 \cdot 10^7)$$

in which

| | |
|---|---|
| a | = 1.1150 (1+ fibre moisture-% / (100+fibre moisture-%), fibre moisture-% = expected to be 13.0 % |
| b | = 1.1350 (1+fibre shrinkage-%/100), fibre shrinkage-%=expected to be 13.5 % |
| $\rho$ | = density of the spinning dope at feeding temperature ($kg/m^3$) |
| $\alpha$ | = cellulose carbamate content of the spinning dope (wt-%) |
| $\varnothing$ | = spinneret hole diameter ($\mu$m) |
| DTEX | = linear density of filament (dtex) |
| $\Omega$ | = total godet stretching measured between the first and the last godets (%). |

The primary purpose of drawing of filaments is to produce filaments with a desired strength by inducing sufficient orientation of the polymer molecules along the axial direction. High degree of orientation of cellulose molecules tends to increase fibre modulus and tenacity. It has surprisingly been found that for spinning in an acidic spin bath, the spinning is preferably carried out at a spinneret draw ratio in the range of 0.3-1.0, preferably 0.4-0.9, particularly 0.5-0.8. When the present fibres are spun in an alkaline spin bath, an optimal area for the spinneret draw ratio (Dr) is slightly different, namely close to 1, such as 0.5-1.4, preferably 0.8-1.2.

Stretching under controlled process conditions enables adjustment of cellulosic fibre properties. The shape of the cross-section of the fibre may be modified by stretching under controlled process condition, e.g. roundish/oval, bean or lobed cross-section of fibres may be obtained as a result of controlled stretching, creating a smooth surface, with a cotton like hand feel.

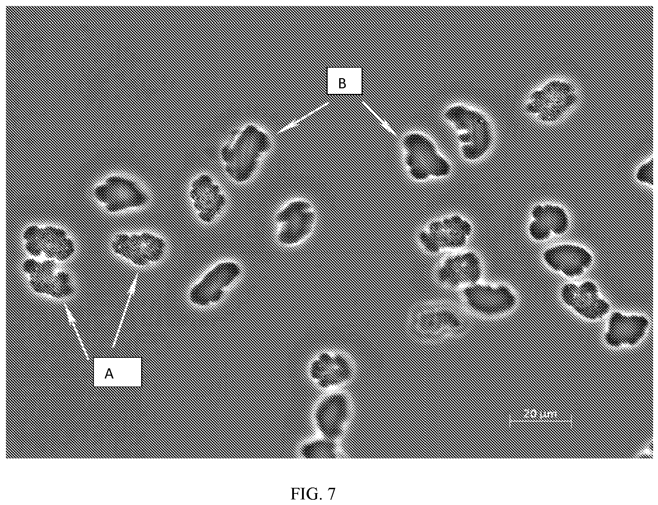

As an example, the fibre is more homogenous and smooth both on the surface and in the inner structure i.e. cross-section compared to viscose fibres, having an irregular serrated surface, see e.g. Figure 7. The rounded structures of oval, bean or lobed fibres provide a high initial modulus.

Further, relative wet strength, i.e. tenacity at break, is improved compared to viscose, which has low wet tenacity at break. Especially a relative wet elongation of the present cellulosic textile fibre is very good. In an embodiment, the cellulosic textile fibre has a wet elongation at break 85-110 % of dry elongation at break in conditioned state, preferably less than 100 %, such as 85-99.9 %, in particular 90-99.9 % (wet/dry relative %) and a wet strength of at least 0.9 cN/dtex, preferably greater than or equal to 1.0 cN/dtex, and relative wet strength of 40-80 % (wet tenacity/dry tenacity), preferably 45-80 %. (relative meaning wet elongation at break/ dry elongation at break, compared to a typical wet/dry elongation at break for viscose being about 120 %).

In cellulosic textile fibres according to an embodiment, no or essentially no residual sulphur is present, particularly when an alkaline spin bath is used.

Further embodiments relate to a cellulosic textile fibre obtainable by embodiments of the method, uses of the fibre obtainable by embodiments of the method and uses of the cellulosic textile fibre. Thus, one embodiment provides a cellulosic textile fibre obtainable by embodiments of the method described herein above.

In a further embodiment the cellulosic textile fibre of any of the above described embodiments is used in a yarn, a textile, a woven fabric, a knitted fabric, a textile garment or a non-woven article, such as weave tow, flock, filament yarn or tow of filaments.

Further embodiments relate to articles comprising the cellulosic textile fibre described herein above. In one embodiment, a yarn comprises the cellulosic textile fibre as described above. In a further embodiment, a textile comprises the cellulosic textile fibre as described above. In a particular embodiment, a woven or knitted fabric comprises the cellulosic textile fibre as described above. In a suitable embodiment, a non-woven article comprises the cellulosic textile fibre as described above. In further embodiments, the cellulosic fibres in the yarn, the textile or the woven fabric are combined with cotton fibres, in particular with virgin cotton fibres. Thus, by means of embodiments it is possible to replace at least a portion of cotton fibres, particularly virgin cotton fibres with manmade cellulosic fibres thereby reducing the impact of *e.g.* the textile industry on the environment. The manmade cellulosic fibres of embodiments describe above have a similar initial modulus to cotton fibres, which allows for the replacement of cotton with the present manmade fibres.

Further, it has surprisingly been found that the presence of the cellulosic textile described herein above can be determined by fluorescence detection. Thus, embodiments provide a method of determining the presence of cellulose carbamate fibres or an article containing such fibres.

In an embodiment, the method comprises subjecting the article to UV light, preferably at 365 nm and detecting fluorescence at a wavelength in the range of 400 to 520 nm caused by said cellulose carbamate fibres. In one embodiment, the article is a yarn, tow of filaments, staple fibres, shortcut fibres or flock. In a further embodiment, the article is a textile garment containing such fibres, such as bleached and/or coloured articles. Pursuant to the foregoing, in an embodiment, if cellulose carbamate has been mixed with viscose, lyocell or modal in fibres, filaments, yarn or fabric, the presence of cellulose carbamate in the manmade cellulosic fibre mixtures can be detected by fluorescence because other regenerated fibres are not fluorescent.

Fluorescence is the emission of light by a substance that has absorbed light or other electromagnetic radiation. The cellulosic textile fibre according to an embodiment exhibits fluorescence. Typically, emitting light by fluorescent material has a longer wavelength. The cellulosic textile fibre according to an embodiment emits blue/turquoise light, e.g. at a wavelength in the range of 450-490 nm, which may be observed visually when said fibre is exposed to UV-light, particularly UV-light at a wavelength of 365 nm. The fluorescence emission wavelength depends on the excitation wavelength. The fibre according to an embodiment exhibits fluorescence at a wavelength in the range of 420 to 520 nm (blue) when excited with UV-light, particularly at 365 nm and exhibits fluorescence at a wavelength in the range of 600 to 750 nm (red) when excited at 546 nm.

Next, some embodiments will be illustrated by means of the following examples.

EXAMPLES

**Example 1. Chemical pre-treatment and carbamation**

Recycled mixed colour sorted cotton textile waste with CED viscosity of 800 $\pm$ 200 ml/g ISO 5351:2010) containing 4.0$\pm$2.8 wt-% of non-cellulosic fibres (mainly polyester, but also traces of nylon, isoprene containing material (elastic band), polyethylene/polypropylene) were mechanically shredded to disintegrate the fabric structure to form of pieces having fibres having a fibre length of 6 mm. The shredded material was chemically pre-treated using a two-stage cooking procedure and bleaching: in the first acidic stage material was treated with sulphuric acid. In the second alkaline stage the washed acid treated material was chemically pre-treated with sodium hydroxide to hydrolyse majority of polyester. Average yield through alkaline stage was 92 % solids on oven dried material. In a bleaching stage, including both ozone and alkaline hydrogen peroxide bleaching stages, the polymerisation degree and polydispersity of the cellulose was further adjusted. Material obtained from bleaching process was suitably dewatered for the subsequent carbamation process. The carbamation process was carried out as described in Finnish patents FI 112869, FI 112795, and in Finnish patent application FI 20195717. In the carbamation stage, the polymerisation degree of the cellulose and degree of substitution (carbamation level) were adjusted. Viscosities of the chemically pre-treated cellulose carbamate material were between 195 and 230 ml/g, based on the CED viscosity measurement according to ISO 5351:2010. Corresponding degree of polymerisation values were 248 and 297. The cellulose carbamates used for these examples had a nitrogen content between 1.6 to 1.9 % by weight of the cellulose carbamate, measured using SFS 5505:1988).

**Example 2. Wet-spinning of cellulose carbamate dope in an acidic spin bath**

The cellulose carbamate obtained from carbamation process was further dissolved for production of cellulose carbamate fibres by the wet spinning process: The ground air dry cellulose carbamate powder was slurried and dissolved in sodium zincate (zinc oxane) solution (the amount of zinc was 0.96 wt-%) to the target cellulose carbamate content of 6.5 wt-% (Samples 1 and 4) or 7.0 wt-% (Samples 2 and 3) and sodium hydroxide content of 6.5 wt-%. The cellulose carbamate dope obtained from the dissolving process was subsequently filtered using a two-stage backflush filtering process using a 20 μm filter media in the second filtration stage. Wet spinning of filtered and deaerated cellulose carbamate dope was carried out using an acidic spin bath optimised for cellulose carbamate process containing e.g. sodium sulphate, free sulphuric acid and aluminium sulphate 80 g/l or 92 g/l. The cellulose dope was coagulated in a spin bath and it was stretched in hot bath. The draw ratio used was 0.58 for Sample 1, 0.72 for Samples 2 and 3 and 0.96 for Sample 4. As a comparable example, spinning using draw ration 1.07 was tested. It was noticed that a fibre was not strong enough to stand required stretching to achieve target fibre properties, linear density was < 2.0 dtex.

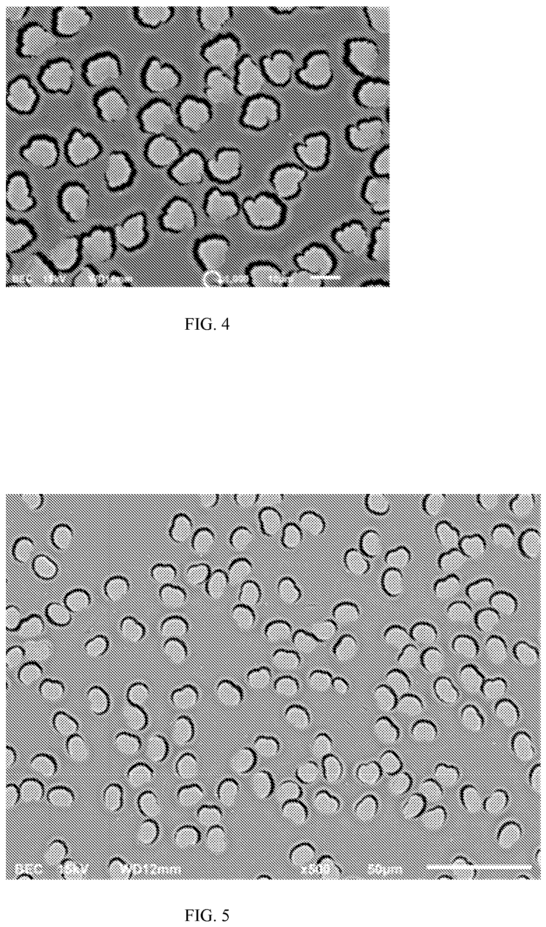

The filament tow obtained from spinning was cut into staple fibres with cut length of 40 mm, except Sample 4 which was used as a filament. Linear density of the fibres (dtex) was measured according to ISO 1973:2021, fibre tenacity (cN/dtex), elongation (%) and initial modulus (cN/dtex) of the fibres were measured according to ISO 5079:2020. The dried fibres were conditioned at a relative humidity of 65 ± 2 % and temperature of 20 ± 2 °C for at least 24 h. The test speed was 20 mm/min and gauge length 20 mm, an average of 20 measurements (Favigraph, Textechno) was calculated. When concentration of aluminium sulphate in spin bath was 80 g/l the sample was not stable enough for conditioned stretching and it coagulated too fast forming serrated fibre which was not strong enough to fulfil textile fibre requirements, see Figure 4. Higher amount of aluminium sulphate (92 g/l) was used in successful runs, Samples 1-4. Fibre properties are listed in Table 1, Samples 1-4. Typical viscose, Tencel, modal and cotton samples were measured as references.

**Example 3. Wet-spinning of cellulose carbamate dope in an alkaline spin bath**

The cellulose carbamate obtained from carbamation process was further dissolved for production of cellulose carbamate fibres by the wet spinning process: The ground air dry cellulose carbamate powder was slurried and dissolved in sodium zincate (zinc oxane) solution (the amount of zinc was 0.96 wt-%) to the target cellulose carbamate content of 6.5 wt-% (Samples 5, 7 and 8) or 8.4 wt-% (Samples 6 and 9), and sodium hydroxide content of 6.5 wt-%. The cellulose carbamate dope obtained from the dissolving process was subsequently filtered using the two-stage backflush filtering process using the 20 μm filter media in the second filtration stage.

Wet spinning of filtered and deaerated cellulose carbamate dope was carried out using an alkaline spin bath optimised for cellulose carbamate process containing 24-27 wt-% of sodium carbonate and 1.4 wt-% of sodium hydroxide. The cellulose dope was coagulated in a spin bath and the applied godet stretching stress was 101 % - 113 % ± 7 % under hot bath. The high stretch of the filament of tow enabled manipulation of the yarn in a wide scale. The draw ratio used was 0.72 for Sample 5, 0.54 for Samples 6 and 8 and 0.70 for Samples 7 and 9. As a comparable example, spinning using a draw ratio of 1.01 was tested (cellulose carbamate content of 6.9 wt-%, stretching 72 %, titer 1,11). It was noticed that in these conditions, the fibre was not strong enough to stand required stretching to achieve target fibre properties. The filament tow obtained from spinning was cut into staple fibres with cut length of 40 mm.

Linear density of the fibres, fibre tenacity, elongation and initial modulus of the staple fibres were measured according to ISO 1973:2021 and ISO 5079:2020 as described in Example 2. Fibre properties are listed in Table 1, Samples 5-9. Samples 8 and 9 and a viscose sample were also measured in a wet stage to study wet properties of the new fibres, wetting time 120 s. The elongation at break (%) of wet Samples 8 and 9 was lower than the elongation at break (%) in dry conditions, relative wet elongations being 99 % and 88 % respectively.

**Example 4. Wet-spinning of cellulose carbamate dope in an alkaline spin bath**

The cellulose carbamates, intrinsic viscosities less than 225 ml/g, obtained from carbamation process were dissolved for production of cellulose carbamate fibres by the wet spinning process: The ground air dry cellulose carbamate powder was slurried and dissolved in sodium zincate (zinc oxane) solution (the amount of zinc was 0.96 wt-%) to the target cellulose carbamate content of at least 8.0 wt-% and sodium hydroxide content of 6.5 wt-%. The cellulose carbamate dope obtained from the dissolving process was subsequently filtered using the two-stage backflush filtering process using the 20 $\mu$m filter media in the second filtration stage.

Wet spinning of filtered and deaerated cellulose carbamate dope was carried out using an alkaline spin bath, 45 Celsius degrees, optimised for cellulose carbamate process containing 25 wt-% of sodium carbonate and 1.5 wt-% of sodium hydroxide. The cellulose dope was extruded (spinneret hole diameter 50 $\mu$m) into the spin bath and coagulated in the spin bath, the applied godet stretching stress was 81 % - 115 % under hot bath, 90 Celsius degrees. The high stretch of the filament tow enabled manipulation of the yarn in a wide scale.

Samples 10-13 were prepared using the following process details.

Sample 10, cellulose carbamate, intrinsic viscosity of 187 ml/g, content of cellulose carbamate 8.50 wt-% in dope. Stretching stress was 81% and draw ratio 1.12.

Sample 11, cellulose carbamate, intrinsic viscosity of 224 ml/g, content of cellulose carbamate 8.03 wt-% in dope. Stretching stress was 98 % and draw ratio 1.02.

Sample 12, cellulose carbamate, intrinsic viscosity of 200 ml/g, content of cellulose carbamate 9.39 wt-% in dope. Stretching stress was 115 % and draw ratio 1.00.

Sample 13, cellulose carbamate, intrinsic viscosity of 209 ml/g, content of cellulose carbamate 8.55 wt-% in dope. Stretching stress was 106 % and draw ratio 0.93.

Linear density of the fibres, fibre tenacity, elongation and initial modulus of the staple fibres were measured according to ISO 1973:2021 and ISO 5079:2020 as described in Example 2. Fibre properties are listed in Table 1, Samples 10-13.

**Example 5. Manufacture of non-woven article**

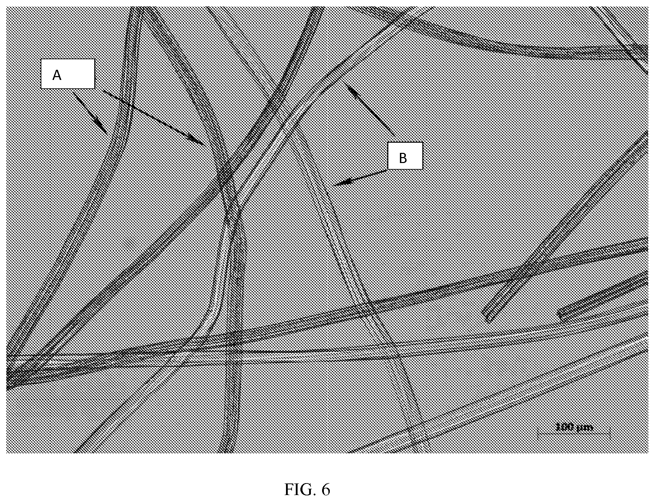

A non-woven sample was prepared using Sample 1 and standard viscose (marked with A in Figures 6 and 7) comprising titanium oxide, 50:50 by weight. Light microscopy (Zeiss Imager) was used to analyse the fibres in the composite material. Cellulose carbamate fibre (CCA, marked with B in Figures 6 and 7) was bright and more homogeneous from surface showing less striations in longitudinal view, see Figure 6. Cellulose carbamate fibre was a smoother lobed/bean fibre compared to serrated viscose fibre, see Figure 7.

**Example 6. Determination of terephtalic acid content**

A content of terephthalic acid in cellulose carbamate fibre produced as described in Example 2, sample 2 (cut length 40 mm) was measured by GC/MS (gas chromatography-mass spectrometry) system. The sample was acidified by hydrochloric acid, pH < 3, and dried in oven overnight. Free terephthalic acid was extracted from the sample by pyridine/methanol solvent and concentrated into 5 ml. The extracted terephthalic acid was methylated and analysed by GC/MS. The free terephthalic acid content is the sample was calculated against external calibration standard. The amount of terephthalic acid was 5 mg/kg (of cellulose carbamate fibre).

**Example 7. Determination of terephtalic acid content**

A content of terephthalic acid in cellulose carbamate fibre produced as described in Example 2, sample 2 (cut length 40 mm) was measured by GC/MS (gas chromatography-mass spectrometry system. The sample was first refluxed in sodium hydroxide (10 wt-%) for 4 hours to hydrolyse polyethylene terephthalate in the sample. Terephthalic acid was extracted from the sample, dissolved in pyridine/methanol solvent and concentrated into 5 ml. The extracted terephthalic acid was methylated and analysed by GC/MS. Terephthalic acid content was calculated against external calibration standard. The amount of terephthalic acid was 309 mg/kg (of cellulose carbamate fibre).

Table 1 shows the various strength properties of manmade cellulose carbamate textile fibres, spun in an acidic bath for Samples 1-4 and spun in an alkaline bath for Samples 5-13, with reference values for other manmade cellulosic fibre materials.

**Table 1**

| Sample | Linear density | Elongation at break | Tenacity | Initial modulus |
|---|---|---|---|---|
| unit | dtex | % | cN/dtex | cN/dtex |
| Sample 1 | 1.13 | 13.5 | 2.7 | 76.7 |
| Sample 2 | 1.29 | 17.3 | 2.4 | 64.3 |
| Sample 3 | 1.29 | 16.2 | 2.3 | 54.0 |
| Sample 4, filament | 1.24 | 14.9 | 2.4 | 81.8 |
| Sample 5 | 1.24 | 13.5 | 2.3 | 96.1 |
| Sample 6 | 1.23 | 8.7 | 2.3 | 117.6 |
| Sample 7 | 1.29 | 9.2 | 2.3 | 113.0 |
| Sample 8 | 1.27 | 10.6 | 2.2 | 98.0 |
| Sample 9 | 1.23 | 8.4 | 2.3 | 108.2 |
| Sample 10 | 1.17 | 9.3 | 2.1 | 98.4 |
| Sample 11 | 1.10 | 9.1 | 2.6 | 102.6 |
| Sample 12 | 1.22 | 7.8 | 2.3 | 110.8 |
| Sample 13 | 1.25 | 8.6 | 2.3 | 106.7 |
| Viscose | 1.31 | 17.0 | 2.3 | 48.3 |
| Tencel | 1.32 | 11.8 | 4.1 | 119.4 |
| Modal | 1.31 | 12.5 | 3.5 | 87.1 |
| Cotton | 1.57 | 8.2 | 3.5 | 64.8 |
| Sample 8, wet | 1.27 | 10.5 | 1.2 | 12.6 |
| Sample 9, wet | 1.23 | 7.4 | 1.3 | 20.4 |
| Viscose, wet | 1.31 | 18.4 | 1.2 | 10.6 |

Some of the samples mentioned listed in Table 1 were microscopically analysed. The result will appear from the attached Figures.

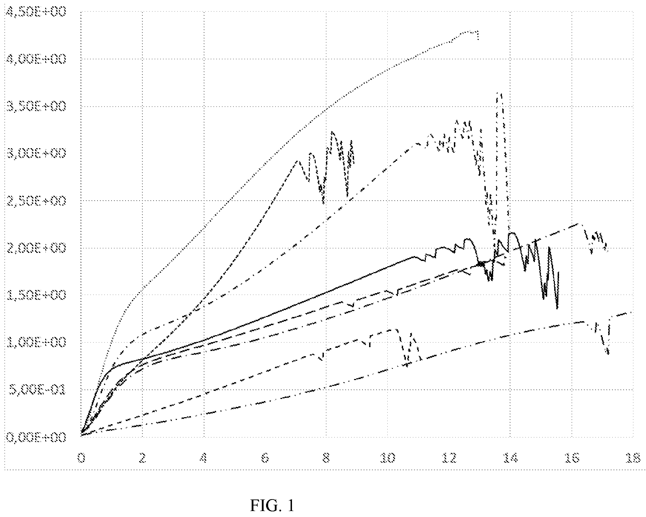

Figure 1 illustrates tenacity strain curves of reference materials and a manmade cellulosic textile fibre in accordance with at least some embodiments of the present invention; from top to bottom, when read at 6 % elongation: Tencel, Cotton, Modal, Sample 5, Sample 3, viscose, Sample 7 (wet), and viscose (wet). The tenacity in cN/dtex is on the y-axis and elongation in percentage on the x-axis.

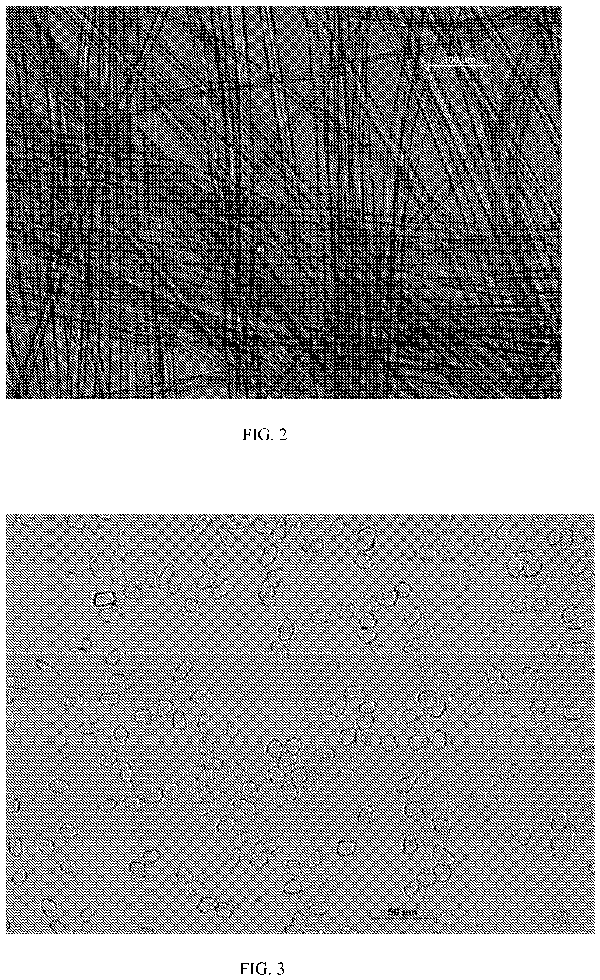

Figure 2 is a light micrograph showing fibres according to at least some embodiments of the invention. The fibres shown in the Figure are those prepared as described in Example 2, Sample 2.

Figure 3 is a light micrograph showing the cross sections of manmade cellulosic fibres according to at least some embodiments of the present invention. The fibres having a lobed/bean shaped cross section are those prepared as described in Example 2, Sample 2.

Figure 4 is an electron micrograph showing the serrated cross sections of a sample of fibres.

Figure 5 is an electron micrograph showing the cross sections of fibres according to at least some embodiments of the present invention. The fibres having oval cross sections are prepared as described in Example 3, Sample 5.

Figure 6 is a light micrograph showing cellulose carbamate fibres according to at least some embodiments of the present invention, prepared as described in Example 3, Sample 1, having better homogeneity and brightness than reference viscose fibres.

Figure 7 is a light micrograph illustrating the structural difference between cross sections of cellulose carbamate fibre according to at least some embodiments of the present invention prepared as described in Example 2, Sample 1, compared to reference viscose fibres. The cellulose carbamate fibre according to embodiments is smooth and has a lobed/bean shape, whereas the reference viscose fibre has a serrated or jagged shape, by comparison.

The verbs "to comprise" and "to include" are used in this document as open limitations that neither exclude nor require the existence of also un-recited features. Furthermore, it is to be understood that the use of "a" or "an", that is, a singular form, throughout this document does not exclude a plurality.

INDUSTRIAL APPLICABILITY

At least some embodiments of the present invention find industrial application in the manufacture of manmade fibres for the textile industry. Fibres having elongation properties similar those of cotton can be provided by the present technology. In embodiments of the present technology, fibres are provided which are flexible enough to be easily used is yarn manufacturing processes. The cellulosic textile fibre, optionally combined with cotton fibres, such as virgin cotton fibres, can be used generally yarns, textiles, woven or knitted fabrics, textile garments and nonwovens.

**Claims**

1. A manmade cellulosic textile fibre having

   - a linear density of 0.8-1.8 dtex, measured according to ISO 1973:2021;
   - a tenacity of 2.0-2.9 cN/dtex, measured according to ISO 5079:2020; and
   - an initial modulus of 50-120 cN/dtex, measured according to ISO 5079:2020;

   wherein at least 50 wt-% of the raw material of the textile fibre is cellulose-containing waste, and at least 50 wt-% of the cellulose-containing waste is textile waste.

2. The cellulosic textile fibre according to claim 1, wherein said cellulosic textile fibre comprises 90 wt-% or more, in particular 95 wt-% or more, by dry weight, of cellulose.

3. The cellulosic textile fibre according to claim 1 or 2, wherein the raw material of the textile fibre is 100 % textile waste.

4. The cellulosic textile fibre according to any of the preceding claims, wherein said cellulosic textile fibre is cellulose carbamate fibre.

5. The cellulosic textile fibre according to any of the preceding claims, wherein said cellulosic textile fibre has an elongation at break of 7-19 % and a nitrogen content of 0.10-1.2 wt-%, preferably 0.15-1.0 wt-%, in particular 0.2-0.9 wt-% by dry weight of the fibre.

6. The cellulosic textile fibre according to any of the preceding claims, wherein said cellulosic textile fibre has a wet elongation at break of 85-110 % of dry elongation at break in conditioned state, preferably less than 100 %, for example 85-99.9 %, in particular 90-99.9 % (wet/dry relative %).

7. The cellulosic textile fibre according to any of the preceding claims, having a wet tenacity of at least 0.9 cN/dtex, preferably greater than or equal to 1.0 cN/dtex, and a relative wet tenacity of 40-80 %, preferably 45-80 % (wet tenacity/dry tenacity).

8. The cellulosic textile fibre according to any of the preceding claims, wherein said cellulosic textile fibre exhibits

   - a linear density of 1.1-1.5 dtex, preferably 1.2-1.4 dtex;
   - a tenacity of 2.1-2.8 cN/dtex, preferably 2.2-2.7 cN/dtex; and
   - an initial modulus of 60-120 cN/dtex, preferably 70-115 cN/dtex.

9. A method for the manufacture of cellulosic textile fibre, comprising the steps of

   - pre-treating cellulose-based material comprising at least 50 wt-% of cellulose-containing waste, wherein at least 50 wt-% of the cellulose-containing waste is textile waste;
   - performing cellulose carbamation to form cellulose carbamate;
   - dissolving the cellulose carbamate in an aqueous alkaline medium to form a cellulose carbamate dope;
   - spinning the cellulose carbamate dope in an aqueous spinning medium to form filaments or filament tow, while subjecting the filament or filament tow to stretching by at least 70 % by length, when temperature of stretching bath is 75-100 °C;

   to obtain cellulose carbamate fibres having a linear density of 0.8-1.8 dtex, measured according to ISO 1973:2021; a tenacity of 2.0-2.9 cN/dtex, measured according to ISO 5079:2020; and an initial modulus of 50-120 cN/dtex, measured according to ISO 5079:2020.

10. The method according to claim 9, wherein the pre-treated cellulose-based material, the cellulose carbamate, the dissolved cellulose carbamate or the spun cellulosic textile fibre is modified by chemical treatment.

11. The method according to claim 9 or 10, wherein the cellulose-based material is pre-treated by mechanically treating it to a predetermined particle size, the mechanically treated material is then subjected to an acidic treatment and an alkaline treatment in a cooking liquor, in desired order, and optionally to a bleaching treatment.

12. The method according to any of the claims 9 to 11, wherein the aqueous alkaline medium of the dope is an alkaline solution comprising sodium hydroxide and zinc.

13. The method according to any of the claims 9 to 12, wherein the aqueous spinning medium is an alkaline spin bath.

14. The method according to claim 13, wherein the alkaline spin bath comprises sodium carbonate and less than 3 wt-%, preferably 0.4-2.99 wt-%, in particular less than 2 wt-% of sodium hydroxide.

15. The method according to claim 13 or 14, wherein the alkaline spin bath comprises sodium hydroxide and sodium carbonate at a weight ratio of 1:9-1:30.

16. The method according to any of the claims 9 to 12, wherein the aqueous spinning medium is an acidic spin bath comprising aluminium sulphate in a concentration of 90 g/l or greater, preferably 90-120 g/l.

17. The method according to any of the claims 9 to 16, wherein the spinning has a spinneret draw ratio in the range of 0.3-1.0, preferably 0.4-0.9, particularly 0.5-0.8.

18. The method according to any of the claims 9 to 17, wherein the total stretching after coagulation of filaments is greater than or equal to 90 % by length, in particular greater than or equal to 95 % by length or generally 70-120 % by length in a stretching unit, preferably 90-120 %.

19. Use of cellulosic textile fibre according to any one of the claims 1 to 8 or as obtained by the method of any one of the claims 9 to 18 in yarn, textile, woven or knitted fabric, a textile garment or non-woven.

20. A yarn, textile, woven or knitted fabric, a textile garment or non-woven article, comprising the cellulosic textile fibre as defined in any one of the claims 1 to 8 or as obtained by the method of any one of the claims 9 to 18.

21. The yarn, textile, woven or knitted fabric or a textile garment according to claim 20, wherein the fibres are combined with cotton fibres, in particular with virgin cotton fibres.

**Patentansprüche**

1. Künstliche Cellulose-Textilfaser aufweisend

   - eine lineare Dichte von 0,8-1,8 dtex, gemessen nach ISO 1973:2021;
   - eine Festigkeit von 2,0-2,9 cN/dtex, gemessen nach ISO 5079:2020; und
   - einen Anfangsmodul von 50-120 cN/dtex, gemessen nach ISO 5079:2020;

   wobei mindestens 50 Gew.-% des Rohstoffs der Textilfaser cellulosehaltiger Abfall ist und mindestens 50 Gew.-% des cellulosehaltigen Abfalls Textilabfall ist.

2. Cellulose-Textilfaser nach Anspruch 1, wobei die Cellulose-Textilfaser 90 Gew.-% oder mehr, insbesondere 95 Gew.-% oder mehr, bezogen auf das Trockengewicht, an Cellulose umfasst.

3. Cellulose-Textilfaser nach Anspruch 1 oder 2, wobei der Rohstoff der Textilfaser zu 100 % aus Textilabfällen besteht.

4. Cellulose-Textilfaser nach einem der vorstehenden Ansprüche, wobei die Cellulose-Textilfaser eine Cellulosecarbamatfaser ist.

5. Cellulose-Textilfaser nach einem der vorstehenden Ansprüche, wobei die Cellulose-Textilfaser eine Bruchdehnung von 7-19 % und einen Stickstoffgehalt von 0,10-1,2 Gew.- %, bevorzugt 0,15-1,0 Gew.-%, insbesondere 0,2-0,9 Gew.-%, bezogen auf das Trockengewicht der Faser, aufweist.

6. Cellulose-Textilfaser nach einem der vorstehenden Ansprüche, wobei die Cellulose-Textilfaser eine nasse Bruchdehnung von 85-110 % der trockenen Bruchdehnung im konditionierten Zustand aufweist, bevorzugt weniger als 100 %, z. B. 85-99,9 %, insbesondere 90-99,9 % (relative Nass-/Trocken-%).

7. Cellulose-Textilfaser nach einem der vorstehenden Ansprüche, aufweisend eine Nassfestigkeit von mindestens 0,9 cN/dtex, bevorzugt größer als oder gleich 1,0 cN/dtex, und einer relativen Nassfestigkeit von 40-80 %, bevorzugt 45-80 % (Nassfestigkeit/Trockenfestigkeit).

8. Cellulose-Textilfaser nach einem der vorstehenden Ansprüche, wobei die Cellulose-Textilfaser Folgendes aufweist:

   - eine lineare Dichte von 1,1-1,5 dtex, bevorzugt 1,2-1,4 dtex,
   - eine Festigkeit von 2,1-2,8 cN/dtex, bevorzugt 2,2-2,7 cN/dtex, und
   - einen Anfangsmodul von 60-120 cN/dtex, bevorzugt 70-115 cN/dtex.

9. Verfahren zur Herstellung von Cellulose-Textilfasern, umfassend die Schritte von

   - Vorbehandlung von Material auf Cellulosebasis, das mindestens 50 Gew.-% cellulosehaltigen Abfall umfasst, wobei mindestens 50 Gew.-% des cellulosehaltigen Abfalls Textilabfall ist;
   - Durchführen einer Cellulosecarbamierung zur Bildung von Cellulosecarbamat;
   - Auflösen des Cellulosecarbamats in einem wässrigen alkalischen Medium, um einen Cellulosecarbamat-Spinnlösung zu bilden;
   - Spinnen der Cellulosecarbamat-Spinnlössung in einem wässrigen Spinnmedium, um Filamente oder Filamentkabel zu bilden, während das Filament oder Filamentkabel einer Verstreckung um mindestens 70 % der Länge unterzogen wird, wenn die Temperatur des Verstreckungsbades 75-100 °C beträgt;

   um Cellulosecarbamatfasern mit einer linearen Dichte von 0,8-1,8 dtex, gemessen nach ISO 1973:2021, aufweisend eine Festigkeit von 2,0-2,9 cN/dtex, gemessen nach ISO 5079:2020, und einen Anfangsmodul von 50-120 cN/dtex, gemessen nach ISO 5079:2020, zu erhalten.

10. Verfahren nach Anspruch 9, wobei das vorbehandelte Material auf Cellulosebasis, das Cellulosecarbamat, das aufgelöste Cellulosecarbamat oder die gesponnene Cellulose-Textilfaser durch chemische Behandlung modifiziert wird.

11. Verfahren nach Anspruch 9 oder 10, wobei das Material auf Cellulosebasis durch mechanische Behandlung auf eine vorbestimmte Partikelgröße vorbehandelt wird, das mechanisch behandelte Material dann einer sauren Behandlung und einer alkalischen Behandlung in einer Kochlauge in der gewünschten Reihenfolge und gegebenenfalls einer Bleichbehandlung unterzogen wird.

12. Verfahren nach einem der Ansprüche 9 bis 11, wobei das wässrige alkalische Medium der Spinnlösung eine Natriumhydroxid und Zink umfassende alkalische Lösung ist.

13. Verfahren nach einem der Ansprüche 9 bis 12, wobei das wässrige Spinnmedium ein alkalisches Spinnbad ist.

14. Verfahren nach Anspruch 13, wobei das alkalische Spinnbad Natriumcarbonat und weniger als 3 Gew.-%, bevorzugt 0,4-2,99 Gew.-%, insbesondere weniger als 2 Gew.-%, Natriumhydroxid umfasst.

15. Verfahren nach Anspruch 13 oder 14, wobei das alkalische Spinnbad Natriumhydroxid und Natriumcarbonat in einem Gewichtsverhältnis von 1:9-1:30 umfasst.

16. Verfahren nach einem der Ansprüche 9 bis 12, wobei das wässrige Spinnmedium ein saures Spinnbad ist, das Aluminiumsulfat in einer Konzentration von 90 g/l oder mehr, bevorzugt 90-120 g/l, umfasst.

17. Verfahren nach einem der Ansprüche 9 bis 16, wobei das Spinnen ein Spinndüsen-Streckverhältnis im Bereich von 0,3-1,0, bevorzugt 0,4-0,9, insbesondere 0,5-0,8 aufweist.

**18.** Verfahren nach einem der Ansprüche 9 bis 17, wobei die Gesamtverstreckung nach der Koagulation der Filamente größer oder gleich 90 % der Länge, insbesondere größer oder gleich 95 % der Länge oder allgemein 70-120 % der Länge in einer Verstreckungseinheit, bevorzugt 90-120 %, beträgt.

**19.** Verwendung von Cellulose-Textilfasern nach einem der Ansprüche 1 bis 8 oder wie durch das Verfahren nach einem der Ansprüche 9 bis 18 in Garnen, Textilien, Geweben oder Maschenwaren, Textilkleidungsstücken oder Vliesstoffen erhalten.

**20.** Garn, Textil, Gewebe, Maschenware, Textilkleidungsstück oder Vliesstoffartikel, umfassend die Cellulose-Textilfaser nach einem der Ansprüche 1 bis 8 oder wie durch das Verfahren nach einem der Ansprüche 9 bis 18 erhalten.

**21.** Garn, Textil, Gewebe, Maschenware oder Textilkleidungsstück nach Anspruch 20, wobei die Fasern mit Baumwollfasern, insbesondere mit reinen Baumwollfasern, kombiniert sind.

**Revendications**

**1.** Fibre textile cellulosique synthétique présentant

- une densité linéaire de 0,8 à 1,8 dtex, mesurée selon la norme ISO 1973:2021 ;
- une ténacité de 2,0 à 2,9 cN/dtex, mesurée selon la norme ISO 5079:2020 ; et
- un module initial de 50 à 120 cN/dtex, mesuré selon la norme ISO 5079:2020 ;

dans laquelle au moins 50 % en poids de la matière première de la fibre textile est des déchets contenant de la cellulose, et au moins 50 % en poids des déchets contenant de la cellulose sont des déchets textiles.

**2.** Fibre textile cellulosique selon la revendication 1, dans laquelle ladite fibre textile cellulosique comprend 90 % en poids ou plus, en particulier 95 % en poids ou plus, en poids sec, de cellulose.

**3.** Fibre textile cellulosique selon la revendication 1 ou 2, dans laquelle la matière première de la fibre textile est 100 % de déchets textiles.

**4.** Fibre textile cellulosique selon l'une quelconque des revendications précédentes, dans laquelle ladite fibre textile cellulosique est une fibre de carbamate de cellulose.

**5.** Fibre textile cellulosique selon l'une quelconque des revendications précédentes, dans laquelle ladite fibre textile cellulosique présente un allongement à la rupture de 7 à 19 % et une teneur en azote de 0,10 à 1,2 % en poids, de préférence de 0,15 à 1,0 % en poids, en particulier de 0,2 à 0,9 % en poids du poids sec de la fibre.

**6.** Fibre textile cellulosique selon l'une quelconque des revendications précédentes, dans laquelle ladite fibre textile cellulosique présente un allongement à la rupture à l'état humide de 85 à 110 % d'allongement à sec à la rupture à l'état conditionné, de préférence inférieur à 100 %, par exemple de 85 à 99,9 %, en particulier de 90 à 99,9 % (% relatif humide/sec).

**7.** Fibre textile cellulosique selon l'une quelconque des revendications précédentes, présentant une ténacité à l'état humide d'au moins 0,9 cN/dtex, de préférence supérieure ou égale à 1,0 cN/dtex, et une ténacité à l'état humide de 40 à 80 %, de préférence de 45 à 80 % (ténacité à l'état humide/ténacité à l'état sec).

**8.** Fibre textile cellulosique selon l'une quelconque des revendications précédentes, dans laquelle ladite fibre textile cellulosique présente

- une densité linéaire de 1,1 à 1,5 dtex, de préférence de 1,2 à 1,4 dtex ;
- une ténacité de 2,1 à 2,8 cN/dtex, de préférence de 2,2 à 2,7 cN/dtex ; et
- un module initial de 60 à 120 cN/dtex, de préférence de 70 à 115 cN/dtex.

**9.** Procédé de fabrication de fibres textiles cellulosiques, comprenant les étapes consistant à

- prétraiter un matériau à base de cellulose comprenant au moins 50 % en poids de déchets contenant de la cellulose, dans lequel au moins 50 % en poids des déchets contenant de la cellulose sont des déchets textiles ;
- réaliser une carbamation de cellulose pour former du carbamate de cellulose ;
- dissoudre le carbamate de cellulose dans un milieu alcalin aqueux pour former une solution de carbamate de cellulose ;
- filer la solution de carbamate de cellulose dans un milieu de filage aqueux pour former des filaments ou un câble de filaments, tout en soumettant les filaments ou le câble de filaments à un étirement d'au moins 70 % en longueur, lorsque la température du bain d'étirement est de 75 à 100 °C ;

pour obtenir des fibres de carbamate de cellulose présentant une densité linéaire de 0,8 à 1,8 dtex, mesurée selon la norme ISO 1973:2021; une ténacité de 2,0 à 2,9 cN/dtex, mesurée selon la norme ISO 5079:2020 ; et un module initial de 50 à 120 cN/dtex, mesuré selon la norme ISO 5079:2020.

10. Procédé selon la revendication 9, dans lequel le matériau à base de cellulose prétraité, le carbamate de cellulose, le carbamate de cellulose dissous ou la fibre textile cellulosique filée est modifié par traitement chimique.

11. Procédé selon la revendication 9 ou 10, dans lequel le matériau à base de cellulose est prétraité en le traitant mécaniquement jusqu'à une taille de particules prédéterminée, le matériau traité mécaniquement est ensuite soumis à un traitement acide et à un traitement alcalin dans une liqueur de cuisson, dans un ordre souhaité, et éventuellement à un traitement de blanchiment.

12. Procédé selon l'une quelconque des revendications 9 à 11, dans lequel le milieu alcalin aqueux de la solution est une solution alcaline comprenant de l'hydroxyde de sodium et du zinc.

13. Procédé selon l'une quelconque des revendications 9 à 12, dans lequel le milieu de filage aqueux est un bain de filage alcalin.

14. Procédé selon la revendication 13, dans lequel le bain de filage alcalin comprend du carbonate de sodium et moins de 3 % en poids, de préférence de 0,4 à 2,99 % en poids, en particulier moins de 2 % en poids d'hydroxyde de sodium.

15. Procédé selon la revendication 13 ou 14, dans lequel le bain de filage alcalin comprend de l'hydroxyde de sodium et du carbonate de sodium dans un rapport pondéral de 1:9 à 1:30.

16. Procédé selon l'une quelconque des revendications 9 à 12, dans lequel le milieu de filage aqueux est un bain de filage acide comprenant du sulfate d'aluminium à une concentration de 90 g/l ou plus, de préférence de 90 à 120 g/l.

17. Procédé selon l'une quelconque des revendications 9 à 16, dans lequel le filage présente un rapport d'étirage de filière dans la plage de 0,3 à 1,0, de préférence de 0,4 à 0,9, en particulier de 0,5 à 0,8.

18. Procédé selon l'une quelconque des revendications 9 à 17, dans lequel l'étirement total après coagulation des filaments est supérieur ou égal à 90 % en longueur, notamment supérieur ou égal à 95 % en longueur ou généralement de 70 à 120 % en longueur dans une unité d'étirement, de préférence de 90 à 120 %.

19. Utilisation de fibre textile cellulosique selon l'une quelconque des revendications 1 à 8 ou telle qu'obtenue par le procédé selon l'une quelconque des revendications 9 à 18 dans un fil, un textile, un tissu tissé ou tricoté, un vêtement textile ou un non-tissé.

20. Fil, textile, tissu tissé ou tricoté, vêtement textile ou article non tissé, comprenant la fibre textile cellulosique telle que définie dans l'une quelconque des revendications 1 à 8 ou telle qu'obtenue par le procédé selon l'une quelconque des revendications 9 à 18.

21. Fil, textile, tissu tissé ou tricoté ou vêtement textile selon la revendication 20, dans lequel les fibres sont combinées avec des fibres de coton, en particulier avec des fibres de coton vierge.

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1509548 A1
- EP 1470162 A1
- WO 2021038136 A
- WO 2021053272 A
- US 20160138200 A
- CN 102766216
- WO 2021181007 A
- FI 112869
- FI 112795
- FI 20195717